Europäisches Patentamt

European Patent Office

Office européen des brevets

(11) Numéro de publication: **0 367 216**
**A2**

## DEMANDE DE BREVET EUROPEEN

(21) Numéro de dépôt: 89120176.6

(22) Date de dépôt: 31.10.89

(51) Int. Cl.5: **G07F 7/10** , **G06K 7/00**

(30) Priorité: 02.11.88 FR 8814255

(43) Date de publication de la demande:
**09.05.90 Bulletin 90/19**

(84) Etats contractants désignés:
**BE CH DE ES GB IT LI**

(71) Demandeur: **NOUVEAUX SYSTEMES INFORMATIQUES - NSI**
**Technoparc du Griffon Les Bureaux du Parc**
**Bâtiment 8**
**F-13127 Vitrolles(FR)**

(72) Inventeur: **Delange, Alain**
**Av.PH. de Girard**
**F-84160 Cadenet(FR)**
Inventeur: **Sola, Robert**
**Quartier les grindanes**
**F-13127 Ventabren(FR)**

(54) Lecteur enregistreur de carte à mémoire.

(57) La présente invention concerne un lecteur-enregistreur de cartes à mémoire du type comprenant un dispositif de lecture-écriture de carte à mémoire.

Un tel appareil comporte trois parties distinctes connectées entre elles par un bus de service au standard de l'IBM-PC :
- une carte processeur (1),
- une carte extension mémoire (2) destinée à remplacer tout périphérique magnétique lent comme mémoire de masse,
- et une carte d'interface (3) comportant tous les coupleurs destinés à interfacer chaque périphérique auquel est connecté le lecteur-enregistreur de l'invention.

Application aux systèmes informatiques destinés aux relations commerciales avec le public.

Figure 1

## Lecteur enregistreur de carte à mémoire.

La présente invention concerne un lecteur-enregistreur de cartes à mémoire. Elle trouve application en particulier dans le domaine du télépaiement de services exigeant la reconnaissance de droits à de tels services.

Dans l'art antérieur, on connaît des lecteurs-enregistreurs de cartes munies de circuits intégrés qui permettent d'une part de débiter un compte de valeurs monétaires inscrit dans la carte, et d'autre part, de décider si le possesseur de la carte et utilisateur de l'application est une personne autorisée.

Cependant, de tels lecteurs ne sont pas efficaces dans un environnement agressif et de plus, entraînent des problèmes difficiles à résoudre pour la liaison entre le lecteur-enregistreur éloigné et un centre de traitement de l'application qui exploite la carte à mémoire.

D'autre part, l'augmentation considérable des usagers de la carte à mémoire sous toutes ses formes conduit aussi à une multiplication du nombre des lecteurs-enregistreurs. Leur programmation et leur installation, leur maintenance et leur service exigent de nouvelles architectures tant logicielles que matérielles. La présente invention apporte remède à ces divers problèmes.

En effet, la présente invention concerne un lecteur-enregistreur de cartes à mémoire du type comprenant un dispositif de lecture-écriture de carte à mémoire. Il est caractérisé notamment par le fait qu'il comporte trois parties distinctes connectées entre elles par un bus de service au standard de l'IBM-PC :
- une carte processeur
- une carte extension mémoire destinée à remplacer tout périphérique magnétique lent comme mémoire de masse,
- et une carte d'interface comportant tous les coupleurs destinés à interfacer chaque périphérique auquel est connecté le lecteur-enregistreur de l'invention.

La présente invention et d'autres avantages de celle-ci seront mieux compris à l'aide de la description et des figures qui sont :
- la figure 1 : un schéma de principe d'un lecteur-enregistreur selon l'invention,
- la figure 2 : un schéma d'organisation d'une carte d'extension mémoire adaptée à l'invention,
- la figure 3 : un schéma d'organisation d'une carte d'interface adaptée à l'invention.

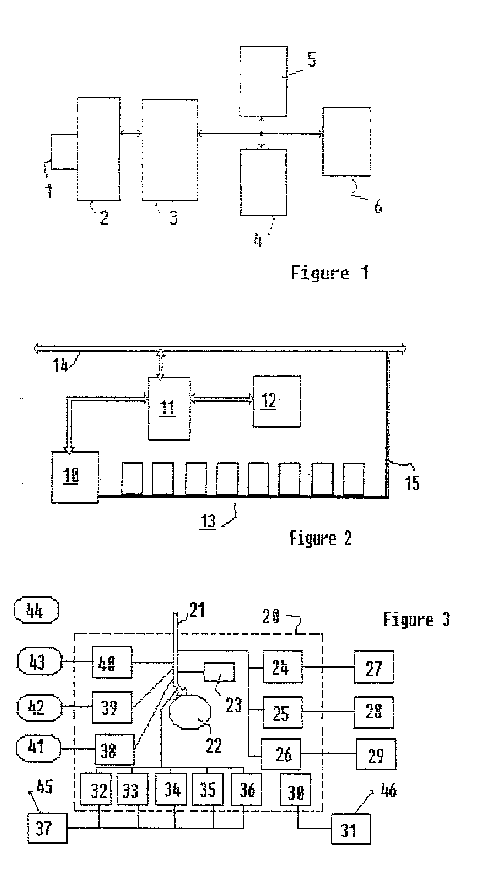

A la figure 1, le lecteur-enregistreur selon l'invention est organisé autour d'un bus de type IBM PC aussi bien au point de vue des signaux électriques que de la connectéque physique. Il comporte donc un ensemble de lignes de signaux d'addresses 4 et un ensemble de signaux de données 5 entre lesquels sont connectés respectivement une carte à microprocesseur de la famille 8088/8086 de Intel Corp. 1, une carte d'extension mémoire 2 destinée à être gérée sous les systèmes d'exploitation PC ou MS/DOS ou des systèmes compatibles, et enfin d'une carte d'interface 3 qui comporte l'ensemble des fonctionnalités pour lesquelles le lecteur-enregistreur de l'invention est prévu.

Une telle organisation présente le mérite de permettre une programmation dans un langage évolué comme le Pascal ou le C et d'être travaillé par de nombreux techniciens grâce à l'extraordinaire diffusion tant de l'architecture matérielle de l'IBM-PC que logicielle sous PC-MS/DOS.

Cette architecture n'est pas naturelle au monde de l'informatique car il s'agit ici d'un problème spécifique d'application d'un composant que l'on considère en général comme un périphérique. La tendance naturelle est en effet de considérer le lecteur-enregistreur du genre de celui de l'invention comme un périphérique classique d'un système informatique central.

Or, une telle solution ne permet pas de résoudre les problèmes que l'on rencontre quand un grand nombre de ces lecteurs-enregistreurs sont connectés en réseau d'informatique distribuée. Dans un tel cas, quelques programmes de gestion sont appelés concurremment et l'invention permet d'exécuter localement une part du traitement.

L'idée à la base de l'invention est de proposer un lecteur-enregistreur comportant deux "axes" de modularités.

Selon un premier "axe" de modularité matérielle, le lecteur-enregistreur est découpé en trois cartes :
- la carte processeur 1,
- la carte extension mémoire 2,
- la carte d'interface 3.

La carte processeur comporte, autour de l'architecture matérielle bien connue de l'IBM PC, comporte trois modes de réalisation.

Selon le premier mode, la carte 1 comporte un microprocesseur Intel 8088 et un espace mémoire réduit limité au service de ce processeur.

Dans le second mode de réalisation, la carte processeur comporte un système compact identique à la carte mère d'un IBM PC comme une carte AMPRO.

Dans le troisième mode de réalisation, la carte processeur est un compatible de l'ordinateur IBM PC ou un IBM PC lui-même.

La carte d'extension mémoire permet de remplacer les mémoires de masse de type lecteurs de disquettes ou de disques ou encore cartouche de bande magnétique. Elle comporte une grande quantité de boîtiers de mémoires état solide par exemple de type mémoire vive comme une RAM. Cette carte peut, pour certaines applications peu dispendieuses en mémoire de masse locale, être réduite à sa plus simple expression, les boîtiers mémoires n'étant alors pas physiquement installés sur les socles soudés sur le circuit imprimé de la carte.

Enfin, la carte d'interface contient le câblage de tous les coupleurs nécessaires à la gestion des périphériques envisageables autour du lecteur-enregistreur de l'invention. Mais, pour un lecteur-enregistreur donné, seuls les coupleurs qu'il exploite sont installés. Cependant, le même circuit imprimé sert pour tous les lecteurs-enregistreurs de l'invention. L'ensemble de la carte d'interface est géré par un microcontroleur Intel 8051.

Dans le second "axe" de modularité, on exploite le langage de programmation du microcontroleur de la carte d'interface 3. Ce processeur est en effet assez puissant pour gérer la version minimale ou version de base du lecteur-enregistreur le plus simple réalisable selon l'invention. Un tel lecteur-enregistreur est alors autonome. On construit donc un noyau logiciel destiné à gérer cette fonctionnalité de base de la carte d'interface dans toutes les versions possibles de lecteur-enregistreur selon l'invention.

Puis, en exploitant l'environnement PC-MS/DOS sous lequel tourne la carte processeur 1, on écrit les programmes d'application par exemple en langage PASCAL.

La carte d'extension mémoire 2 comporte des registres programmables mécaniquement ou par logiciel qui comportent le code de chaque type de composant à programmer. Ainsi, le logiciel d'application peut reconnaitre si le boitier mémoire qui occupe l'espace d'adressage entre ADRDEBUT et ADRFIN est d'un type comme une mémoire morte ou ROM ou une mémoire vive statique ou dynamique ou RAM ou encore une mémoire morte effaçable électriquement ou EEPROM. Cette solution de gestion des types de composants par registres est étendu au reste du lecteur-enregistreur de l'invention.

A la figure 2, on a représenté la première version de la carte processeur 1. Elle comporte un microprocesseur Intel 8088 11 connecté au bus 14. Le microprocesseur utilise une zone mémoire 12 de 256 à 640 kiloctets qui peut ainsi être gérée à la fois sous MS/DOS et sur le bus de type IBM PC.

La carte comporte ensuite une rangée 13 de huit boîtiers conservant les données inscrites après extinction de l'alimentation électrique de la carte. Ces boîtiers peuvent être du type ROM, EPROM, EEPROM ou NOVRAM. Dans un mode préféré de réalisation, cette rangée de boîtiers occupent 32 kiloctets à partir de l'adresse &C000. Les huit boîtiers sont connectés au bus 14 par une ligne 15 qui communique aussi avec un circuit 10 de gestion des mémoires 13. En particulier dans le cas où les mémoires 13 sont du type EEPROM, le circuit 10 exécute localement sur une commande du microprocesseur 11 la programmation (écriture) ou l'effacement des boîtiers 13.

Une telle zone mémoire 13 permet de réaliser un téléchargement des programmes utilisés localement par le processeur 11 de la carte processeur du lecteur-enregistreur de l'invention. Elle reçoit aussi des modifications locales de tel ou tel de ces programmes par télémaintenance.

Dans une telle solution, le lecteur-enregistreur de l'invention peut être reprogrammé à distance à travers un périphérique de communication géré, comme on le verra plus loin par la carte d'interface. Le logiciel typique écrit pour le lecteur-enregistreur de l'invention est produit à l'aide d'un compilateur produisant du code inscriptible en mémoire morte sans qu'il soit nécessaire de passer par le système d'exploitation MS-DOS ou tout autre.

Le circuit de gestion 10 comporte aussi un registre décrivant aux logiciels d'application ou de téléchargement ou encore de télémaintenance le type de boitier utilisé dans la rangée 13.

Dans les modes de réalisations préférées de l'invention, la largeur du bus de données, ou plus exactement la partie "données" du bus 14, détermine la répartition des données dans les boîtiers de la rangée 13. En particulier, en utilisant un processeur 11 de type Intel 8088, la largeur du bus de données exploitable est de 8 bits réels, le logiciel interne permettant selon les cas, en deux cycles ou en un seul , de simuler un bus de 16 ou de 8 bits. Or les boîtiers mémoires utilisés pour constituer la rangée 13 sont tous du type à bus de données de 8 bits. Le circuit de gestion 10 détecte la largeur réelle du bus de données du processeur 11 et détermine comment les octets sont répartis entre les boîtiers. Ainsi, si un mot de deux octets est sur un bus de 16 bits type 8086 ou 80286, le circuit 10 détermine lequel de deux parmi les 8 boîtiers 13 sont sélectionnés pour ce mot de 16 bits.

Le système de gestion des mots de données 8/16 bits se transpose aussi au reste de l'espace adressable de la carte processeur.

Le bus 14 est connecté au reste des cartes du lecteur-enregistreur de l'invention par un connecteur au standard électrique du bus de l'IBM-PC.

A la figure 3, on a représenté un schéma d'une carte d'interface destinée à un lecteur-enregistreur selon l'invention. Connectée au bus 21 du lecteur-enregistreur au standard IBM-PC, la carte 20 comporte tous les coupleurs nécessaires à tous les périphériques nécessaires aux applications de l'invention. Mais, seuls les composants des coupleurs utilisés par les lecteurs-enregistreurs d'une application donnée sont installés sur des socles destinés à cet effet sur le circuit imprimé constituant la carte d'interface. Une telle solution évite d'avoir à étudier des circuits imprimés différents pour chaque application.

La carte d'interface 21 comporte un microcontroleur 22 du type Intel 8051 qui est chargé de gérer toute la carte par le moyen d'un logiciel chargé dans une zone mémoire de service 23. Dans une version réduite, ce logiciel de base sert à rendre la carte d'interface autonome du reste du lecteur-enregistreur. Par le bus de service 21, le microcontroleur 8051 22 pilote les différents coupleurs 24 à 26, 32 à 36, 30 et 38 à 40 en leur fournissant des commandes et en recevant d'eux des mots d'état qui le renseigne sur leur état respectif en cours d'exécution.

A l'extérieur du lecteur-enregistreur proprement dit, on trouve différents périphériques 27 à 29, 31, 37 et 41 à 44. Ces périphériques sont ou non installés. Cela dépend de l'application pour laquelle le lecteur-enregistreur de l'invention est prévu.

D'une manière générale, la carte d'interface comporte un coupleur 24 type RS 232 destiné à assurer la liaison locale du lecteur-enregistreur à un équipement informatique comme un microordinateur par une ligne 27.

La carte 20 comporte aussi un coupleur 25 d'adaptation au réseau téléphonique multistandard V22, V23 et X25 qui permet de se raccorder par le réseau téléphonique public ou privé 28 à des équipements informatiques distants. Dans de nombreuses applications, cette caractiristique permet de gérer de manière centralisée un certain nombre de paramètres d'exécution des logiciels d'applications, mais aussi de réaliser, comme il a été décrit plus haut, le téléchargement de modules logiciels et de faire de la télémaintenance.

Afin de permettre d'activer ces différentes possibilités de communications 27, 28, la carte comporte aussi un coupleur de détection de sonnerie 26 connecté au réseau de communications concerné 29.

Afin de permettre le dialogue local entre un utilisateur ou exploitant et le lecteur-enregistreur de l'invention, on dispose de plusieurs périphériques :
- Un clavier 41 géré par un coupleur 38 qui dans de nombreuses versions est un clavier simplifié de type hexadécimale à seize touches;
- une imprimante 42 et son coupleur 38 dans lequel sont implantés les circuits aussi bien pour une imprimante thermique que pour une imprimante à impact;
- un afficheur qui peut être aussi bien du type à diodes qu'à cristaux liquides. Dans un mode de réalisation, l'afficheur 42 est un afficheur de deux lignes de quarante caractères qui peut afficher des messages indiquant à l'utilisateur comment utiliser le lecteur-enregistreur de l'invention ou indiquant à un exploitant interrogeant le même lecteur-enregistreur des paramètres d'état décrivant son fonctionnement.

D'autres périphériques sont prévus aussi qui n'ont pas été représentés au dessin ni leurs coupleurs d'ailleurs, mais ils sont à la portés de l'homme de métier et leur ajout dans le lecteur-enregistreur ne change pas le concept de l'invention.

D'autre part, la carte d'interface 20 comporte aussi un ensemble de coupleurs destinés à recevoir l'un au moins des dispositifs de lecture-écriture 37 de carte à mémoire suivants :
- Thomson 1300, 1301
- Thomson 1648 à microprocesseur
- Thomson 16402 à microprocesseur et à mémoire morte effaçable électriquement EEPROM,
- Bull CP8
- Bull CP16.

D'autres lecteurs sont disponibles aussi. Mais, dans la plupart des cas, un seul dispositif de lecture-écriture 37 de carte à mémoire est installé dans le lecteur-enregistreur de l'invention.

Dans certaines applications multicartes, deux ou plus des dispositifs de lecture-écriture 37 de carte à mémoire permettent d'exploiter plusieurs types de cartes.

Le dispositif de lecture-écriture 37 de carte à mémoire comporte aussi des dispositifs électromécaniques ou des relais destinés à commander de tels dispositifs qui commandent des distributeurs de produits ou de services, manoeuvrent des portillons ou des monnayeurs, etc.

La carte d'interface 20 comporte aussi un coupleur 30 pour un dispositif de lecture-écriture de carte à piste magnétique par exemple au standard ISO. Dans le cas où l'application nécessite un tel dispositif, il est installé 31 et peut réaliser les mêmes interfacages que son pendant 37 en carte à mémoire.

La carte d'interface 20 comporte aussi d'autres dispositifs qui ne sont pas représentés à la figure 3 et qui sont par exemple :
- une horloge temps réel qui permet de mesurer des temps d'utilisation ou d'autres paramètres liés à l'application ou au fonctionnement du lecteur-enregistreur de l'invention,
- un système de veille qui active l'initialisation du microcontroleur 22 et celle du système hôte quand le lecteur-enregistreur de l'invention est activé,
- un relais d'alimentation générale qui peut être commandé à distance par exemple depuis la liaison téléphonique 28,
- un dispositif de détection du niveau de tension d'alimentation qui permet de controler le bon fonctionnement du lecteur-enregistreur de l'invention,
- etc.

## Revendications

1. Lecteur-enregistreur de cartes à mémoire du type comprenant un dispositif de lecture-écriture de carte à mémoire, caractérisé notamment par le fait qu'il comporte trois parties distinctes connectés entre elles par un bus de service au standard de l'IBM-PC :
- une carte processeur (1).
- une carte extension mémoire (2) destinée à remplacer tout périphérique magnétique lent comme mémoire de masse,
- et une carte d'interface (3) comportant tous les coupleurs destinés à interfacer chaque périphérique auquel est connecté le lecteur-enregistreur de l'invention.

2. Lecteur-enregistreur selon la revendication 1, caractérisé en ce que la carte processeur (1) comporte un microprocesseur du genre Intel 8088 et une espace mémoire de service limité.

3. Lecteur-enregistreur selon la revendication 1, caractérisé en ce que la carte processeur (1) comporte un système compact.

4. Lecteur-enregistreur selon la revendication 1, caractérisé en ce que la carte processeur (1) est un micrordinateur compatible avec un IBM-PC.

5. Lecteur-enregistreur selon l'une des revendications 2 à 4, caractérisé en ce que la carte processeur (1) comporte une zone de mémoire (13) géré par un circuit de gestion (14) et destinée à recevoir en particulier par téléchargement des routines spéciales ou des données exploitées par un logiciel d'application implanté sur la carte processeur.

6. Lecteur-enregistreur selon la revendication 5, caractérisé en ce que la zone mémoire comporte des mémoires permanentes état solide comme des ROM, des PROM, des EPROM, des EEPROM ou des NOVRAM.

7. Lecteur-enregistreur selon la revendication 6, les mémoires étant du type EPROM ou EEPROM, caractérisé en ce que le circuit de gestion (14) comporte aussi des moyens pour effacer et inscrire des données dans.ces mémoires.

8. Lecteur-enregistreur selon la revendication 1, caractérisé en ce que la carte d'extension mémoire (3) est constituée par un circuit imprimé portant des socles en nombre suffisant pour équiper la carte d'une quantité abondante d'espace adressable.

9. Lecteur-enregistreur selon la revendication 8, caractérisé en ce que la carte d'extension mémoire (3) comporte des registres destinés à indiquer le type de boitiers de mémoires utilisés dans au moins une zone d'extension de mémoire adressable.

10. Lecteur-enregistreur selon la revendication 9, caractérisé en ce que la programmation est de type manuelle, les registres étant alors constitués par des microcontacts connectés sur le bus de données ou en ce que la programmation est de type logicielle, les registres étant constitués par des adresses mémoires de la carte d'extension mémoire et interrogés par le logiciel d'exploitation.

11. Lecteur-enregistreur selon la revendication 1, caractérisé en ce que la carte d'interface (3) comporte :
- des coupleurs (24-26) destinés à interfacer des périphériques de communication (27-29) comme une ligne RS232 ou le réseau téléphonique,
- des coupleurs (32-36) destinés à interfacer au moins un dispositif de lecture-écriture de carte à mémoire (37),
- un coupleur (30) destiné à interfacer un dispositif de lecture-écriture de carte à piste magnétique (31),
- des coupleurs (38-40) destinés à interfacer des périphériques (41-44) qui fournissent des informations à un utilisateur ou exploitant du lecteur-enregistreur ou à recevoir des commandes de celui-ci,
- et un microcontroleur (22) connecté un reste du lecteur-enregistreur par les bus (21) au standard de l'IBM-PC et exécutant un logiciel de base installé dans une mémoire de service (23) en fournissant des commandes aux différents coupleurs et recevant leurs mots d'état.

Figure 1

Figure 2

Figure 3